# EUROPEAN PATENT APPLICATION

(11) **EP 1 871 026 A2**
(43) Date of publication of application: **26.12.2007**
(21) Application number: 07108917.1
(22) Date of filing: 25.05.2007
(51) Int. Cl.: H04H 1/00

(54) **Digital broadcasting receiver having local information notification function and notification method using the same**

(30) Priority: 19.06.2006 KR 20060054948
(71) Applicant: Samsung Electronics Co., Ltd., Suwon-si Gyeonggi-do (KR)
(72) Inventor: Kwon, Seong Geun, Gyeonggi-do (KR)
(74) Representative: Zimmer, Franz-Josef

(57) **Abstract**

A Digital Broadcasting receiver and a local information notification method using the same are disclosed. The Digital Broadcasting receiver includes a gap filler information storage unit for storing location coordinates where respective gap fillers for repeating Digital Broadcasting data transmitted from a satellite are installed, a map storage unit for storing electronic map data, a receiving unit for receiving the Digital Broadcasting data including Gap Filler IDentification information (GFID), a sub-controller for detecting the GFID from the received Digital Broadcasting data, a main controller for reading the gap filler information storage unit to determine the location coordinate of a gap filler, based on the GFID detected by sub-controller, and for searching the electronic map data to determine the location corresponding to the location coordinate, and an output unit for outputting a map indicating a current location to the searched location. Thus, the present invention reads local information around the Digital Broadcasting receiver using the local information identified by the gap filler.

## Description

### BACKGROUND OF THE INVENTION

### 1. Field of the Invention

The present invention relates generally to a Digital Broadcasting receiver and method using the receiver, and more particularly, to a Digital Broadcasting receiver which performs a local information notification function using identification information of gap fillers for use in satellite broadcasting.

### 2. Description of the Related Art

With the recent development of mobile communication technology, mobile communication terminals, such as a mobile phone, a Personal Digital Assistant (PDA) and a laptop computer are widely used, and their functions are constantly increasing. For example, an early mobile phone could only perform voice communication, but a current mobile phone can perform text and image messaging.

Also, recent wireless Internet services are being provided to channel information to mobile communication service subscribers via a wireless communication network. Such information includes news, weather, sports, stock prices, exchange rates and traffic information, and is provided in the form of text, voice message and still and moving images.

Specifically, Location-Based Services (LBS) of the wireless Internet services have received heightened attention due to their wide availability and convenience. The LBS are communication services that use knowledge about the location of mobile communication terminals, and provide additional information related to the location, such as local information.

In order to use the LBS, the locations of the mobile communication terminal must be known. To this end, with conventional technology, a network-based method using a base station receiving signal or a handset-based method using a Global Positioning System (GPS) signal was employed.

The network-based method is advantageous in that a new module does not need to be added to the conventional mobile phone, and thus additional fees for mobile phone development are not needed. However, it is disadvantages because it is not precise, since it cannot determine locations accurately beyond approximately 500m to a few km of the phone depending on a cell size or the location determination method of a wireless base station.

Also, although the handset-based method can precisely measure a location, it has drawbacks in that an expensive GPS receiver is mounted onto the mobile communication terminal.

That is, the conventional technology is disadvantageous in that an expensive GPS receiver must be mounted onto the mobile communication terminals or location errors must be decreased to provide additional information, such as local information, etc., related to the locations of the mobile communication terminals.

### SUMMARY OF THE INVENTION

In order to solve the above problems, an object of the present invention is to provide a digital broadcasting receiver and a notification method, which can determine a precise location and provide local information based on the determined location, without installing additional expensive equipment for determining the location.

In accordance with an aspect of the present invention, there is provided a Digital Broadcasting receiver including a gap filler information storage unit for storing location coordinates where respective gap fillers for repeating Digital Broadcasting data transmitted from a satellite are installed, a map storage unit for storing electronic map data, a receiving unit for receiving the Digital Broadcasting data including Gap Filler IDentification information (GFID), a sub-controller for detecting the GFID from the received Digital Broadcasting data, a main controller for reading the gap filler information storage unit to determine a location coordinate of a gap filler, based on the GFID detected by sub-controller, and for searching for the location corresponding to the location coordinate from the electronic map data, and an output unit for outputting a map indicating the current location to the searched location.

The gap filler information storage unit includes a gap filler identification number storage field, a location coordinate storage field for storing a location coordinate where a corresponding gap filler is installed, and a location name storage field for storing a location name corresponding to the location coordinate.

The map storage unit stores electronic map data, which includes a traveling distance, an average traveling speed and direction information, based on links where the roads on a map are classified and displayed.

The sub-controller stores information of a GFID storage field of the Digital Broadcasting data first, and detects a GFID based on the GFID field information.

The Digital Broadcasting receiver further includes a local information storage unit for storing local information based on the location coordinates. Here, the main controller reads the local information storage unit to determine the local information corresponding to the location coordinate of a gap filler, and outputs the local information through an output unit.

The local information storage unit further includes a local information ID storage field, a location coordinate storage field for storing a specific location coordinate, a location name storage field for storing a location name corresponding to the location coordinate, and a surrounding location information storage field for storing local information around the location coordinate.

The Digital Broadcasting receiver is one of a mobile phone or a PDA.

In accordance with another aspect of the present invention, there is provided a method for providing a local information notification, including storing location coordinates where respective gap fillers for repeating Digital Broadcasting data transmitted from a satellite are installed, receiving the Digital Broadcasting data from the gap filler, detecting GFID of the gap filler from the received Digital Broadcasting data, detecting location coordinates where the gap filler is installed using the GFID, searching a location corresponding to the location coordinate from the previously stored electronic map data, and displaying a current location on the searched location.

The detecting GFID is performed using information of a GFID storage field, which was previously stored.

The method further includes reading local information corresponding to the detected location coordinate from local information based on location coordinates, which was previously stored, and outputting the read local information.

### BRIEF DESCRIPTION OF THE DRAWINGS

The above object, features, and advantages of the present invention will be more apparent from the following detailed description in conjunction with the accompanying drawings, in which:
FIG. 1 illustrates a configuration of a Digital Broadcasting system according to the present invention;
FIG. 2 illustrates a Digital Broadcasting receiver according to the first embodiment of the present invention;
FIG. 3 illustrates a format of Digital Broadcasting data transmitted to the Digital Broadcasting receiver of FIG. 2;
FIG. 4 illustrates a structure of the database for administrating gap filler information in the Digital Broadcasting receiver of FIG. 2;
FIG. 5 illustrates the flow of a method for providing local information notification using the Digital Broadcasting receiver of FIG. 2;
FIG. 6 illustrates a Digital Broadcasting receiver according to a second embodiment of the present invention;
FIG. 7 illustrates a structure of the database for administrating local information in the Digital Broadcasting receiver of FIG. 6; and
FIG. 8 illustrates the flow of a method for providing a local information notification using the Digital Broadcasting receiver of FIG. 6.

### DETAILED DESCRIPTION OF THE PREFERRED EMBODIMENTS

Hereinafter, preferred embodiments of the present invention are described in detail with reference to the accompanying drawings. In the drawings, the same or similar elements are denoted by the same reference numerals even though they are depicted in different drawings. In the following description, a detailed description of known functions and configurations incorporated herein will be omitted for the sake of clarity and conciseness.

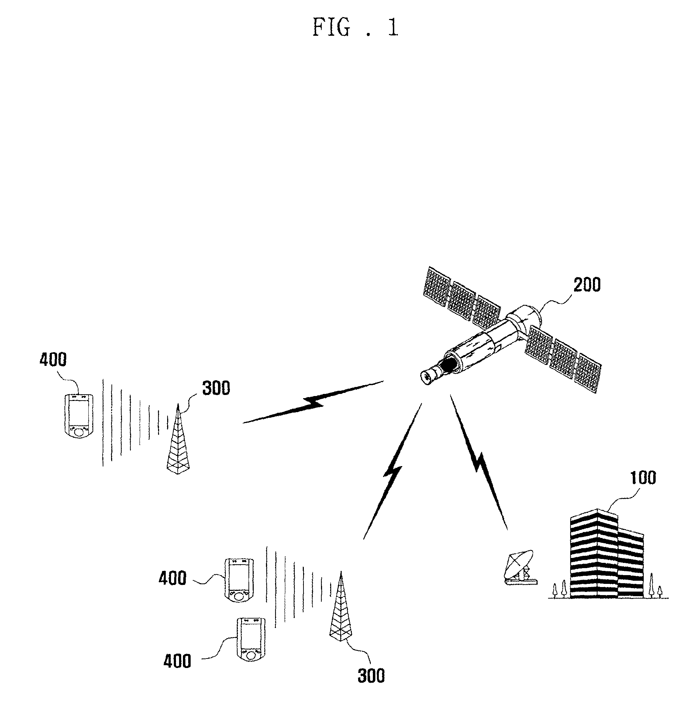

FIG. 1 illustrates a configuration of a Digital Broadcasting system according to the present invention. The Digital Broadcasting refers to broadcasting services where various multimedia signals, such as voices and images, are digitally modulated and then provided to users. Particularly, Digital Broadcasting allows users to access various types of broadcasting through a personal portable receiver or a vehicular receiver, which has an omni-directional receiving antenna, even while users are moving.

However, as loading technology of a memory capable of storing a large amount of digital multimedia (for example, moving images and music video) has advanced and mobile communication terminals are increasingly in demand, recent mobile communication terminals (e.g., a Digital Broadcasting receiver phone) that can receive the Digital Broadcasing data have been developed.

FIG. 1 illustrates a satellite Digital Broadcasting receiver system transmitting Digital Broadcasting data to such mobile communication terminals. Referring to FIG. 1, the S- Digital Broadcasting system includes a broadcasting station 100, a digital broadcasting satellite 200, a gap filler 300 and Digital Broadcasting receivers 400.

The broadcasting station 100 creates various broadcasting signals at 14 GHz for moving images, music videos and television shows, and transmits them to the digital broadcasting satellite 200.

The digital broadcasting satellite 200 receives the broadcasting signals at 14 GHz from the broadcasting station 100 and transmits the broadcasting signals having a bandwidth of 2.6 GHz or 14 GHz, to the Earth.

The gap filler 300 receives the broadcasting signals having a bandwidth of 14 GHz from the digital broadcasting satellite 200 and outputs broadcasting signals having a bandwidth of 2.6 GHz. The gap filler 300 inserts GFID to a specific region of the received broadcasting signals from the digital broadcasting satellite 200 and then outputs the broadcasting signals including the GFID. The GFID is inherent information to each gap filler, such that each gap filler has different GFID.

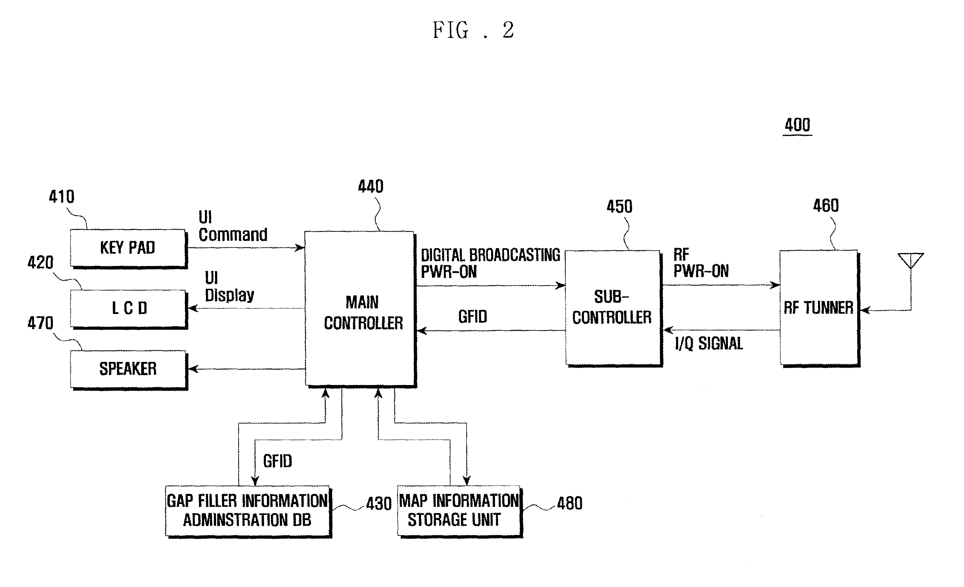

The Digital Broadcasing receiver 400 receives the broadcasting signals having a bandwidth of 2.6 GHz, from the digital broadcasting satellite 200 or the gap fillers 300. Specifically, the Digital Broadcasting receiver 400 checks the location of the Digital Broadcasting receiver 400, using the GFID included in the received broadcasting signals from the gap filler 300, and provides local information based on the location information. For example, the Digital Broadcasting receiver 400 detects its own location coordinate and displays its current location on an electronic map or reads local information, which corresponds to the location coordinate, from local information already stored in the database and provides this information to the user. The Digital Broadcasting receiver 400 is preferably configured as a mobile communication terminal, such as a mobile phone or a PDA. FIG. 2 illustrates a Digital Broadcasting receiver according to the first embodiment of the present invention. Referring to FIG. 2, the DigitalBroadcasting receiver 400 includes a keypad 410, a Liquid Crystal Display (LCD) 420, a gap filler information administration DataBase 430, a main controller 440, a sub-controller 450, a Radio Frequency (RF) tuner 460, a speaker 470 and a map information storage unit 480.

The keypad 410 inputs a User Input (UI) command for controlling the Digital Broadcasting receiver 400, and then transmits it to the main controller 440.

The LCD 420 displays a variety of information related to operations of the Digital Broadcasting receiver 400 according to the control of the main controller 440. Specifically, the LCD 420 displays Digital Broadcasting data, received through the RF tuner 460, according to the control of the main controller 440. Also, the LCD 420 displays a map, stored in the map information storage unit 480, according to the control of the main controller 440, and the current location of the Digital Broadcasting receiver 400 on the map.

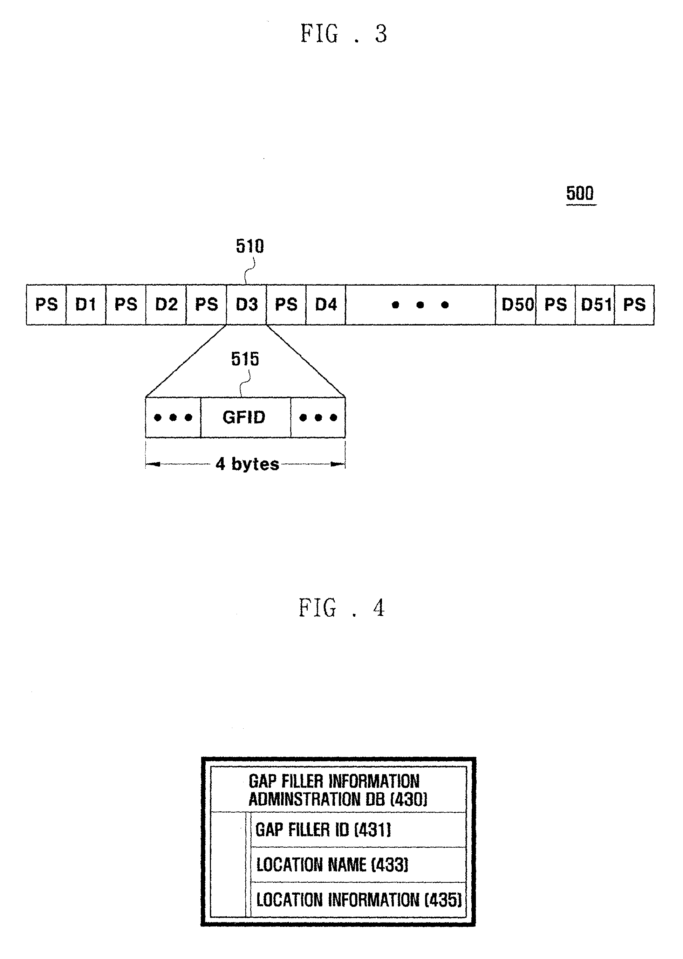

The gap filler information administration DB 430 stores location information where the respective gap fillers for repeating Digital Broadcasting data transmitted from a satellite are installed. Specially, it is preferable that the gap filler information administration DB 430 stores/administrates location coordinates and location names where the respective gap fillers are installed. For example, the gap filler information administration DB 430 can store location information (e.g., location coordinates and location names) corresponding to the respective gap filler lDs. A preferred structure of the gap filler information administration DB 430 is shown in FIG. 4, and will be explained later herein.

The main controller 440 controls operations of the Digital Broadcasting receiver 400 by, for example, a UI command, inputted through the keypad 410, or a previously stored control algorithm. Particularly, the main controller 440 controls the ON/OFF operations of the sub-controller 450 based on user request information inputted through the keypad 410. Also, the main controller 440 inputs GFID from the sub-controller 450 and searches the gap filler information administration DB 430 using the GFID. As a result, the main controller 440 reads a location coordinate corresponding to the GFID from the gap filler information administration DB 430. The main controller 440 searches the map information storage unit 480 using the location coordinate and reads location information, corresponding to the location coordinate, from the electronic map. After that, the electronic map and the location of the Digital Broadcasting receiver 400 on the electronic map are displayed on the LCD 420. To this end, it is preferable that the main controller 440 is implemented by an appropriate Mobile Station Modem™ (MSM™) chip. Further, the main controller 440 can create voice signals for the location information and output this voice message through the speaker 470.

The sub-controller 450, also referred to as a Digital Broadcasting chip, is initiated in response to a Digital Broadcasting power control signal, Digital Broadcasting PWR-ON, transmitted from the main controller 440, and turns on the RF tuner 460 to receive Digital Broadcasting data. To this end, the sub-controller 450 transmits an RF power control signal, RF PWR-ON, to the RF tuner 460. When the sub-controller 450 inputs an I/Q signal including Digital Broadcasting data from the RF tuner 460, it is preferable that the sub-controller 450 detects a GFID from the Inphase/Quadrature (I/Q) signal and transmits it to the main controller 440. Particularly, it is preferable that from a pilot channel received by the RF tuner 460, the sub-controller 450 detects the GFID that transmits the pilot channel, and then transmits it to the main controller 440. Such an operation is performed so that the main controller 440 can detect location information corresponding to the GFID. To this end, it is preferable that the sub-controller 450 stores GFID field information (i.e., storage location of GFID) within the pilot channel.

The RF tuner 460 is initiated in response to the RF tuner power control signal, RF PWR-ON, transmitted from the sub-controller 450 to receive Digital Broadcasting data, and then transmits the received Digital Broadcasting data to the sub-controller 450.

The map information storage unit 480 serves to store/administrate electronic map data. For example, the map information storage unit 480 serves to store/administrate an electronic map data, which includes a traveling distance, average traveling speed and direction information, based on links where roads of a map are classified and displayed.

FIG. 3 illustrates a structure of a database for administrating gap filler information to perform a local information notification according to the first embodiment of the present invention. Specifically, FIG. 3 shows a frame of Digital Broadcasting data 500. Referring to FIG. 3, the Digital Broadcasting data 500 is configured to include a Pilot Symbol PS of 32 bits and satellite broadcasting control data D1 ~ D5 each having 32 bits, in which the pilot symbol and the satellite broadcasting control data are alternatively aligned. Here, the pilot symbol is configured in such a manner that all its data is '1.' Of the satellite broadcasting control data, 'D1' denotes a unit word, 'D2' denotes a frame counter and 'D3~D50' denote control data for the broadcasting channel. Also, 'D51' denotes a reserved control data area and does not store data.

The Digital Broadcasting data 500, configured as described above, stores a variety of control information and channel information in the divided data areas.

Thus, the gap filler stores GFID in one of the data areas, in which data is not stored, and then transmits it to the Digital Broadcasting receiver. Generally, the gap filler inserts the GFID into the upper 4 bytes of the data area 'D3' of the Digital Broadcasting data 500, labeled as 510 in FIG. 3. Also, the gap filler may insert the GFID into the area D51 in which data is not stored.

Thus, to detect the GFID in the Digital Broadcasting data 500, it is preferable that the sub-controller 450 of FIG. 2 first stores information concerning the area in which the Digital broadcasting data 500 the GFID is stored, and then detects the GFID in the area.

FIG. 4 illustrates a database structure for administrating gap filler information in the Digital Broadcasting receiver of FIG. 2. Referring to FIG. 4, the gap filer information administration DB 430 includes a GFID field 431, a location name field 433 and a location information field 435.

The GFID field 431 stores GFID. The location name field 433 stores a name of a corresponding location. The location information field 435 stores a location coordinate where the corresponding gap filler is installed.

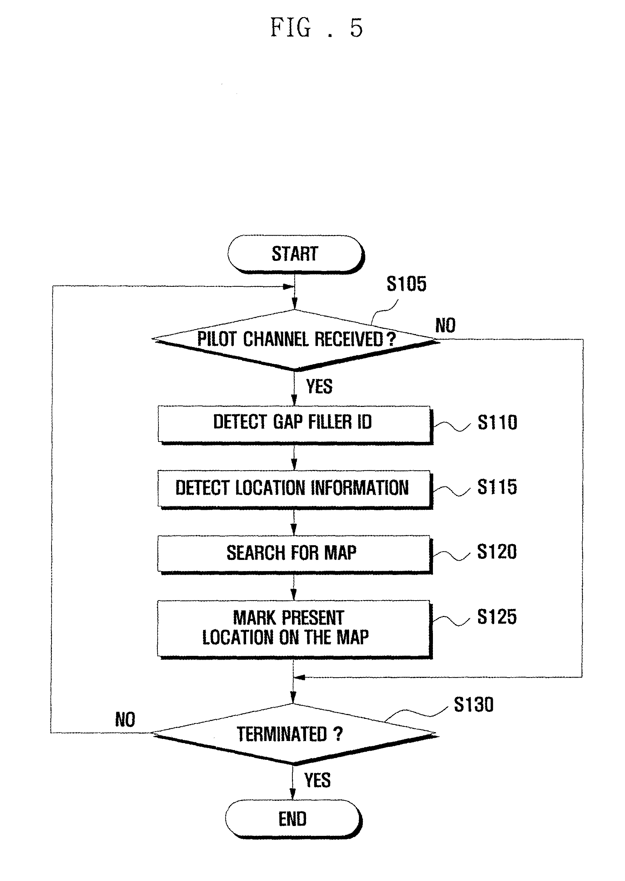

FIG. 5 illustrates the flow of a method for providing local information using the Digital Broadcasting receiver of FIG. 2. Referring to FIGS. 2 and 5, when Digital Broadcasting data including the pilot channel is received by the RF tuner 460 (S105), the sub-controller 450 analyzes the Digital Broadcasting data to detect the GFID that transmits the pilot channel (S110). After that, the detection result is transmitted to the main controller 440.

The main controller 440 searches the gap filler information administration DB 430 based on the GFID to detect location information corresponding to the GFID (S115). Since the gap filler information administration DB 430 stores location coordinates where the respective gap fillers are installed, it is preferable that the above step of S115 is performed in such a manner that the main controller 440 detects the location coordinate of installation of the corresponding gap filler using the GFID.

The main controller 440 searches the map information storage unit 480 using the location coordinate (S120) and reads location information, which corresponds to the location coordinate, from the electronic map. The electronic map and the location of the Digital Broadcasting receiver 400 on the electronic map are output through the LCD 420 (S125). That is, the current location of the Digital Broadcasting receiver 400 is displayed on the map. It is then determined whether a termination command has been inputted (S130). When Digital Broadcasting data is not received by the RF tuner 460 (S105), it is determined whether a termination command has been inputted (S130). Here, the main controller 440 can create voice signals for the location information and output the voice message through the speaker 470.

Steps (S105 to S125) repeat until a termination command is inputted (S130).

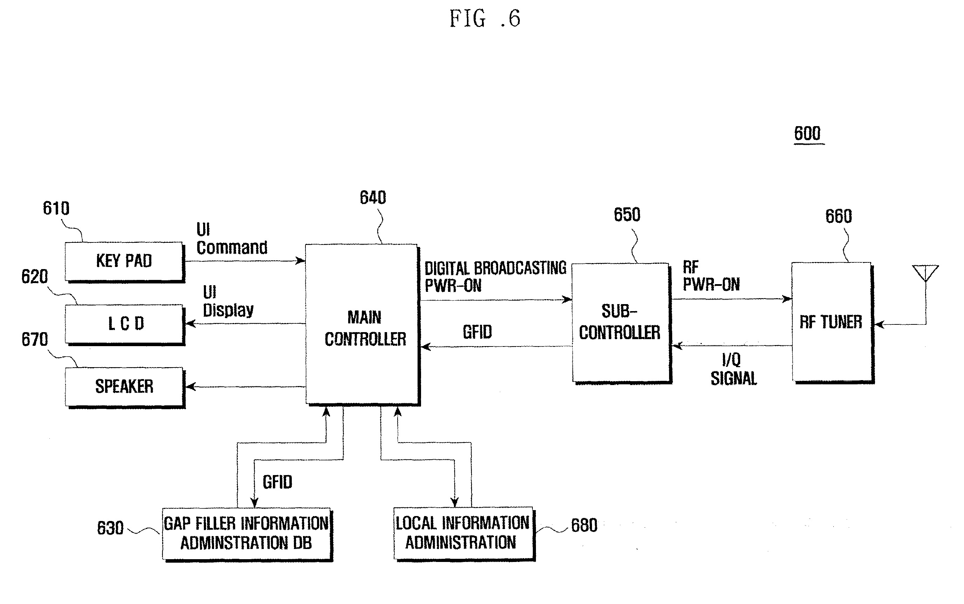

FIG. 6 illustrates a Digital Broadcasting receiver according to the second embodiment of the present invention. Referring to FIG. 6, the Digital Broadcasting receiver 600 includes a key-pad 610, an LCD 620, a gap filler information administration DB 630, a main controller 640, a sub-controller 650, an RF tuner 660, a speaker 670 and a local information administration DB **[IN FIG. 6, 680 IS REFERRED TO AS A MAP INFORMATION STORAGE UNIT. IT APPEARS THAT THE FIGURE NEEDS TO BE AMENDED. PLEASE CLARIFY AND CORRECT][ATTACHED REVISED FIG.6]680.**

The key-pad 610 inputs a User Input (UI) command for controlling the Digital Broadcasting receiver 600, and then transmits it to the main controller 640.

The LCD 620 displays a variety of information related to operations of the Digital Broadcasting receivers 600 according to the control of the main controller 640. Specifically, the LCD 620 displays Digital Broadcasting data, received through the RF tuner 660 according to the control of the main controller 640. Also, the LCD 620 preferably displays local information (e.g., geographic information and traffic information) that corresponds to the current location of the Digital Broadcasting receiver 600, according to the control of the main controller 640.

The gap filler information administration DB 630 stores location information where the respective gap fillers for repeating Digital Broadcasting data transmitted from a satellite are installed. Particularly, the gap filler information administration DB 630 stores/administrates location coordinates and location names where the respective gap fillers are installed. For example, the gap filler information administration DB 430 stores location information (e.g., location coordinates and location names) corresponding to the respective GFID_{S}. The structure of the gap filler information administration DB 630 is similar to that of the DB 430 as shown in FIG. 4, and thus its detailed description will be omitted.

The main controller 640 controls operations of the Digital Broadcasting receiver 600 by, for example, a Ul command, inputted through the keypad 610, or a previously stored control algorithm. Particularly, the main controller 640 controls the ON/OFF operations of the sub-controller 650 based on user request information, inputted through the keypad 610. Also, the main controller 640 inputs GFID from the sub-controller 650 and searches the gap filler information administration DB 630 using the GFID. As a result, the main controller 640 reads a location coordinate corresponding to the GFID from the gap filler information administration DB 630.

The main controller 640 searches the local information administration DB [**SEE PREVIOUS COMMENT**]680 using the location coordinate. The main controller 640 reads local information (e.g., geographic information and surrounding traffic information), corresponding to the location coordinate from the local information administration DB **[SEE PREVIOUS COMMENT**]680, and then outputs the information through the LCD 620. To this end, it is preferable that the main controller 640 is implemented by an appropriate MSM™ chip. Further, the main controller 640 can create voice signals for the location information and output this voice through the speaker 470.

The sub-controller 650, also referred to as a Digital Broadcasting chip, is initiated in response to a Digital Broadcasting power control signal, Digital Broadcasting PWR-On, transmitted from the main controller 640, and turns on the RF tuner 660**[IN ELEMENT 660 IN FIG. 6, PLEASE CHANGE "TUNNER" TO --TUNER--][OK]** for receiving Digital Broadcasting data. To this end, the sub-controller 650 transmits an RF power control signal, RF PWR-ON, to the RF tuner 660. When the sub-controller 650 inputs an I/Q signal including Digital Broadcasting data from the RF tuner 660, it is preferable that the sub-controller 650 detects a GFID from the I/Q signal and transmits it to the main controller 640. Specifically, from a pilot channel received by the RF tuner 660, the sub-controller 650 detects a GFID that transmits the pilot channel, and then transmits it to the main controller 640. Such an operation is performed so that the main controller 640 can detect location information corresponding to the GFID. To this end, it is preferable that the sub-controller 650 stores GFID field (location) information within the pilot channel.

The RF tuner 660 is initiated in response to the RF tune power control signal, RF PWR-ON, transmitted from the sub-controller 650 to receive Digital Broadcasting data, and then transmits the received Digital Broadcasting data to the sub-controller 650.

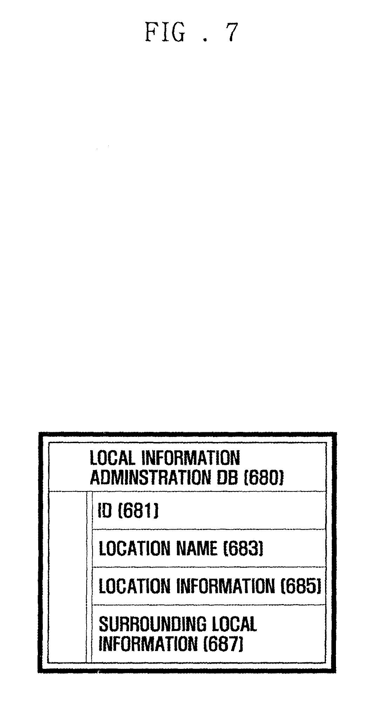

The local information administration DB 680[**SEE PREVIOUS COMMENTS REGARDING 680**] stores local information based on location coordinates. For example, geographic information (e.g., building names) and traffic information are stored around a specific location coordinate. FIG. 7 illustrates a database structure for administrating local information in the digital broadcasting receiver of FIG. 6. Referring to FIG. 7, the local information administration DB 680 includes a local information ID storage field 681, a location name storage field 683 **[PLEASE VERIFY][OK**]for storing a location name corresponding to the location coordinate, a location coordinate information storage field 685 for storing a specific location coordinate information[**PLEASE VERIFY][OK]**, and a surrounding location information storage field 687 for storing local information around the location coordinate.

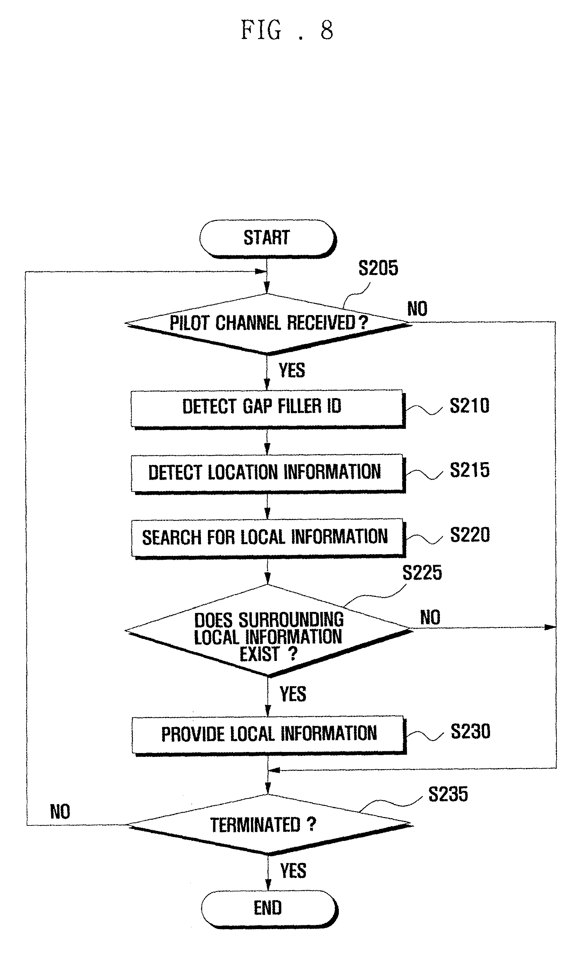

FIG. 8 illustrates the flow of a method for providing a local information notification using the Digital Broadcasting receiver of FIG. 6.

Referring to FIGS. 6 and 8, when Digital Broadcasting data including a pilot channel is received by the RF tuner 660 (S205), the sub-controller 650 analyzes the Digital Broadcasting data to detect GFID that transmits the pilot channel (S210). The detection result is transmitted to the main controller 640.

The main controller 640 searches the gap filler information administration DB 630 based on the GFID to detect location information corresponding to the GFID (S215). Since the gap filler information administration DB 630 stores location coordinates where the respective gap fillers are installed, step S215 should be performed in such a manner that the main controller 640 detects the location coordinate of the installation of the corresponding gap filler using the GFID.

The main controller 640 searches the local information administration DB 680 using the location coordinate (S220). From the result of the searching (S220), it is determined whether local information corresponding to the location coordinate exists (S225). When the determination of S225 is positive, the local information is provided (S230). That is, the local information corresponding to the location coordinate is output through the LCD 620. It is then determined whether a termination command has been inputted (S235). When Digital Broadcasting data is not received by the RF tuner 660 (S205) or when the determination of S225 is negative, it is also determined whether a termination command has been inputted (S235). Here, the main controller 640 can create voice signals for the location information and output this voice through the speaker 670.

As such, the present invention can receive Digital Broadcasting data, check location information without an expensive GPS receiver, and provide local information based on the location information.

While the present invention has been shown and described in detail with reference to embodiments thereof, it will be understood by those of ordinary skill in the art that various changes in form and detail may be made therein without departing from the spirit and scope of the present invention as defined by the following claims.

As described in the foregoing, the Digital Broadcasting receiver having a local information notification function and the notification method thereof can determine precise locations without expensive equipment (e.g., a GPS receiver) and can provide local information based on the location information.

## Claims

1. A Digital Broadcasting receiver, comprising:
a gap filler information storage unit for storing location coordinates where respective gap fillers for repeating Digital Broadcasting data transmitted from a satellite are installed;
a map storage unit for storing electronic map data;
a receiving unit for receiving the Digital Broadcasting data including Gap Filler IDentification information (GFID);
a sub-controller for detecting the GFID from the received Digital Broadcasting data;
a main controller for reading the gap filler information storage unit to determine a location coordinate of a gap filler, based on the GFID detected by sub-controller, and for searching for the location corresponding to the location coordinate from the electronic map data; and
an output unit for outputting a map indicating the current location to the searched location.

2. The receiver of claim 1, wherein the gap filler information storage unit further comprises:
a gap filler identification number storage field;
a location coordinate storage field for storing a location coordinate where a corresponding gap filler is installed; and
a location name storage field for storing a location name corresponding to the location coordinate.

3. The receiver of claim 1, wherein the map storage unit stores electronic map data, which includes a traveling distance, an average traveling speed, and direction information, based on links where roads on a map are classified and displayed.

4. The receiver of claim 1, wherein the sub-controller initially stores information of a GFID storage field of the Digital Broadcasting data, and subsequently detects a GFID based on the GFID field information.

5. The receiver of claim 1, wherein the Digital Broadcasting receiver is installed to a mobile phone or a Personal Digital Assistant (PDA).

6. A Digital Broadcasting receiver, comprising:
a gap filler information storage unit for storing location coordinates where respective gap fillers for repeating Digital Broadcasting data transmitted from a satellite are installed;
a local information storage unit for storing local information based on the location coordinates;
a receiving unit for receiving the Digital Broadcasting data including Gap Filler IDentification information (GFID);
a sub-controller for detecting the GFID from the received Digital Broadcasting data;
a main controller for reading a location coordinate of a gap filler from the gap filler information storage unit based on the GFID of the gap filler, detected by sub-controller, and local information of a location corresponding to the location coordinate from the local information storage unit; and
an output unit for providing the local information.

7. The receiver of claim 6, wherein the gap filler information storage unit further comprises:
a gap filler identification number storage field;
a location coordinate storage field for storing a location coordinate where a corresponding gap filler is installed; and
a location name storage field for storing a location name corresponding to the location coordinate.

8. The receiver of claim 6, wherein the local information storage unit further comprises:
a local information lD storage field;
a location coordinate storage field for storing a specific location coordinate;
a location name storage field for storing a location name corresponding to the location coordinate; and
a surrounding location information storage field for storing local information near the location coordinate.

9. The receiver of claim 6, wherein the sub-controller initially stores information of a GFID storage field of the Digital Broadcasting data, and subsequently detects a GFID based on the GFID field information.

10. The receiver of claim 6, wherein the Digital Broadcasting receiver is installed to a mobile phone or a Personal Digital Assistant (PDA).

11. A method for providing a local information notification, comprising:
storing location coordinates where respective gap fillers for repeating Digital Broadcasting data transmitted from a satellite are installed;
receiving the Digital Broadcasting data from at least one of the gap fillers;
detecting Gap Filler IDentification information (GFID) of the gap filler from the received Digital Broadcasting data;
detecting location coordinates where the gap filler is installed using the GFID;
searching a location corresponding to the location coordinate from the previously stored electronic map data; and
displaying a current location on the searched location.

12. The method of claim 11, wherein detecting the GFID is performed using information of a GFID storage field, which was previously stored.

13. A method for providing a local information notification, comprising:
storing location coordinates where respective gap fillers for repeating Digital Broadcasting data transmitted from a satellite are installed;
receiving the Digital Broadcasting data from at least one of the gap fillers;
detecting Gap Filler IDentification information (GFID) of the gap filler from the received Digital Broadcasting data;
detecting location coordinates where the gap filler is installed using the GFID;
reading local information corresponding to the detected location coordinate from local information that is previously stored based on location coordinates; and
outputting the read local information.

14. The method of claim 13, wherein detecting the GFID is performed using information of a GFID storage field, which was previously stored.
